# FASCICULE DE BREVET EUROPEEN

(11) **EP 3 177 817 B1**
(45) Date de publication et mention de la délivrance du brevet: **02.05.2018**
(21) Numéro de dépôt: 15759878.0
(22) Date de dépôt: 31.07.2015
(51) Int. Cl.: F02C 9/42, F02K 9/38, F02K 9/95, H01M 10/39, F01D 15/10, F02C 3/10, F02C 7/26, F02C 7/32

(54) **AÉRONEF**
FLUGZEUG
AIRCRAFT

(30) Priorité: 07.08.2014 FR 1457671
(43) Date de publication de la demande: 14.06.2017
(73) Titulaire: Safran Helicopter Engines, 64510 Bordes (FR); Safran Electronics & Defense, 92100 Boulogne-Billancourt (FR); Safran Electrical & Power, 31702 Blagnac Cedex (FR)
(72) Inventeur: KLONOWSKI, Thomas, 64160 Sedzere (FR); NOLLET, Michel, 92100 Boulogne Billancourt (FR); PAILHOUX, Frédéric, 77670 Vernou-la Celle-Sur-Seine (FR)
(74) Mandataire: David, Alain
(86) Numéro de dépôt international: PCT/FR2015/052119
(87) Numéro de publication internationale: WO 2016/020607

(56) Documents cités:
- EP-A1- 2 052 967
- FR-A1- 2 914 697
- JP-A- S62 180 966
- US-A- 5 899 411
- US-A1- 2005 008 929

## Description

### Domaine technique

L'invention s'inscrit dans le domaine des turbomachines à turbine libre, comme on en trouve couramment sur les hélicoptères.

Pour mémoire, une turbomachine (parfois désignée par le sigle TAG) à turbine libre comprend une turbine de puissance ou turbine libre qui, dans un hélicoptère, entraîne les rotors de celui-ci par l'intermédiaire d'une roue libre et d'une boîte de transmission principale (désignée dans la suite par BTP), et par ailleurs un générateur de gaz constitué principalement d'un compresseur, d'une chambre de combustion et d'une turbine haute pression.

Un réducteur mécanique ou boîte d'accessoires permet de relier l'arbre du générateur de gaz à une machine électrique (désignée en abrégé par MEL) constituée d'un stator et d'un rotor, pouvant fonctionner indifféremment en moteur (démarreur) ou en génératrice. Dans le mode moteur, la machine électrique est alimentée par une source d'énergie électrique et développe un couple moteur de manière à entraîner en rotation le générateur de gaz de la turbomachine, notamment dans le but d'en assurer le démarrage, en effectuant ainsi une assistance au démarrage. Dans le mode génératrice, la machine électrique est entraînée en rotation par le générateur de gaz de manière à prélever sur ce dernier une puissance mécanique qui est ensuite convertie en puissance électrique.

### Etat de la technique

Quand un aéronef muni de deux turbomachines est en situation de vol de croisière, il a été proposé dans les documents FR2967132 et FR2967133 de mettre une des deux turbomachines dans un régime de veille de manière à désynchroniser sa turbine libre de la boîte de transmission tout en augmentant le régime de l'autre turbomachine, ce qui permet de diminuer la consommation en carburant globale du système.

L'invention se situe ainsi notamment dans le contexte d'une réduction de la consommation d'un hélicoptère au moins bimoteur, dans lequel en vol de croisière économique, c'est-à-dire dans une phase de vol caractérisée par une puissance demandée à chaque moteur assez faible se traduisant par une consommation spécifique (en abrégé CS) très élevée, une des turbines est mise en veille de telle manière que l'autre moteur fonctionne à régime élevé et bénéficie de ce fait d'une consommation spécifique beaucoup plus faible.

Plusieurs variantes de ce régime de veille ont été proposées.

Dans une première variante, appelée « super ralenti », le générateur de gaz de la turbine à gaz désynchronisée peut être régulé à un régime de ralenti faible.

Dans une seconde variante, appelée « super ralenti assisté », le générateur de gaz de la turbine à gaz désynchronisée de la BTP peut également être régulé à un régime de ralenti faible, et simultanément un couple moteur d'assistance est appliqué au générateur de gaz par l'intermédiaire de la machine électrique et de la boîte d'accessoires.

Dans une troisième variante, la chambre de combustion de la turbomachine peut être totalement éteinte, et il est alors proposé de maintenir le générateur de gaz en rotation à une vitesse permettant de faciliter le rallumage à l'issue de la phase de vol de croisière. La gamme des vitesses adaptées peut être qualifiée de fenêtre d'allumage préférentielle. Ce mode de fonctionnement, appelé mode « vireur », est une assistance prolongée du générateur de gaz.

Dans ces trois modes de fonctionnement, qui sont susceptibles d'être maintenus pendant toute la durée de vol de croisière, la puissance transmise à la BTP par la turbomachine en veille est généralement nulle, et il n'est en général pas possible de prélever de puissance sur son générateur de gaz.

Dans les trois variantes qui viennent d'être évoquées, il est nécessaire d'être en mesure de réactiver rapidement la turbomachine désynchronisée, notamment en situation d'urgence, par exemple en cas de panne d'une autre turbomachine, s'il y a trois turbomachines ou plus au total, - ou de l'autre turbomachine si les turbomachines sont au nombre de deux. C'est notamment la raison du maintien du générateur de gaz en rotation à une vitesse facilitant le rallumage dans le système où la chambre de combustion est éteinte.

Le maintien du générateur de gaz en rotation dans la fenêtre d'allumage préférentielle (mode « vireur ») et l'assistance prolongée au générateur de gaz régulé au ralenti (mode « super ralenti assisté ») exigent quant à eux une puissance assez faible mais au final une énergie importante, l'intérêt du système résidant dans son utilisation pendant une grande durée de vol.

Il a été proposé dans les documents FR2967132 et FR2967133, entre autres solutions, d'utiliser un démarreur électrique alimenté par un démarreur/générateur relié au générateur de gaz de l'autre turbomachine, ou un générateur entraîné directement ou indirectement par la turbine libre de l'autre turbomachine.

Quant au redémarrage d'urgence à partir d'une situation de faible régime ou de chambre de combustion éteinte, il requiert d'appliquer sur l'arbre du générateur de gaz une puissance élevée en raison de l'inertie importante des ensembles tournants et du couple résistant du compresseur de la turbomachine. Cette puissance doit être délivrée pendant une durée brève, de l'ordre de quelques secondes, afin de garantir un démarrage rapide de la turbomachine.

Il a été suggéré dans le document FR2967133 d'utiliser, entre autres solutions, une énergie électrique, en particulier un supercondensateur, qui fournit une assistance ponctuelle au générateur de gaz.

Dans le document EP2581586, il a aussi été proposé d'utiliser deux supercondensateurs (qui sont des organes de stockage électrique), qui sont chacun chargés respectivement par un générateur électrique entraîné par le générateur de gaz d'une des deux turbomachines, et qui servent chacun, ponctuellement, pour démarrer l'autre turbomachine à partir d'un état éteint de celle-ci.

La présente invention a notamment pour objet, dans ce contexte, de fournir un moyen technique pratique de réaliser, sur un aéronef qui soit a minima bimoteur, la fonction de « réactivation rapide » depuis un mode économique de la turbine, en utilisant en lieu et place du démarreur électrique conventionnel un système électrotechnique alimenté par le réseau de bord ou par un réseau spécifique d'alimentation en énergie électrique et permettant d'assurer différents modes de fonctionnement qui sont :
- Le démarrage au sol de la turbine à gaz,
- Le mode économique,
- La réactivation en vol de la turbine, qui était préalablement en mode économique, et
- La réactivation rapide en vol de la turbine, qui était préalablement en mode économique.

La présente invention a également pour objet de permettre de réaliser efficacement, sur un aéronef monomoteur, une fonction de réactivation rapide d'une turbomachine, en cas de survenue d'un mode d'extinction non désiré, en utilisant en lieu et place du démarreur électrique conventionnel un système électrotechnique alimenté par le réseau de bord ou par un réseau spécifique d'alimentation en énergie électrique.

L'invention se situe notamment dans le contexte de la demande de brevet français n° 1400753 déposée le 27 mars 2014 et vise plus particulièrement à fournir une architecture de système électrique donnant un moyen d'assurer de façon améliorée le mode dit de réactivation rapide en vol de la turbine à gaz.

Les architectures des systèmes électriques proposées jusqu'à présent pour l'hybridation d'une turbine à gaz font toujours appel à un élément de stockage de nature dite « secondaire » sur le bus continu HVDC (dénommé ainsi d'après l'expression anglaise « High Voltage Direct Current ») qui a la fonction de réserve d'énergie électrique nécessaire pour le mode de réactivation rapide. « Secondaire » signifie que ces éléments de stockage sont rechargeables. La plupart nécessitent un organe de gestion électrique appelé BMS (d'après l'expression anglaise « Battery Management System »).

Les solutions existantes présentent ainsi plusieurs inconvénients, dont les principaux sont les suivants :
1/ Le BMS, indépendamment de la technologie du stockeur secondaire (Batterie Li-Ion, NiMH, supercapacité, capacités hybrides...), est un équipement dit «complexe» puisque comprenant des dispositifs de commutation de puissance et utilisant de l'électronique pour contrôler l'état de charge, les paramètres de fonctionnement et l'état de santé de l'organe de stockage, et donc régi par des normes de certification avionique, telles que les normes DO-178 et DO-254 de la RTCA (« Radio Technical Commission for Aeronautics »).
   Le BMS augmente le poids du système et sa probabilité de défaillance.
2/ Les couples secondaires connus ont un taux d'autodécharge non négligeable, qui rend obligatoire une recharge périodique de la batterie et impose donc la présence d'un chargeur, soit dans l'aéronef, soit dans les infrastructures au sol.
3/ Les couples secondaires se dégradent peu à peu même lorsqu'ils ne sont que rarement utilisés (vieillissement dit calendaire). Ce qui oblige à les tester et à les remplacer périodiquement.
4/ Ces organes de stockage dit secondaires ont de plus l'inconvénient d'être toujours actifs, c'est-à-dire que le système peut fournir à tout moment de l'énergie électrique dans des cas non désirés tels que les courts-circuits, ou être déchargés prématurément par un phénomène de courant de fuite.
5/ Ces organes de stockage secondaires ont un autre inconvénient général qui est la tenue aux environnements sévères, tels que les températures froides et chaudes, ainsi qu'aux stress mécaniques (vibrations, chocs). Pour tenir face à ces contraintes environnementales, ces organes secondaires doivent être dimensionnés en conséquence, ce qui se traduit par une regrettable augmentation de la masse du système à embarquer à bord d'un aéronef et plus particulièrement d'un hélicoptère.
6/ Un autre inconvénient pour certaines technologies d'organes de stockage secondaires est la dangerosité de ces éléments en cas d'emballement thermique, lequel emballement thermique peut être notamment provoqué par des courts-circuits externes ou internes aux organes de stockage secondaires, par leur surcharge, ou par d'autres causes notamment environnementales.
7/ Le couplage au réseau de bord d'un stockeur secondaire est problématique compte tenu des interactions entre un réseau dont la tension peut varier à tout moment, et une batterie secondaire dont la tension est fonction de l'état de charge. Des précautions doivent donc être prises (ce qui conduit à une complexification du système) pour éviter tout risque électrique, voire tout risque de non disponibilité opérationnelle du stockeur.

### Exposé de l'invention

Afin de remédier aux inconvénients précités, conformément à l'invention, il est proposé un aéronef comprenant au moins une première turbomachine à turbine libre équipée d'un générateur de gaz, associée à une machine électrique pouvant fonctionner en démarreur et en génératrice, la première turbomachine pouvant être mise en mode de veille ou en mode d'extinction non désirée, la machine électrique étant connectée à un réseau spécifique d'alimentation en énergie électrique, tel qu'un réseau de bord, l'aéronef comprenant de plus un dispositif d'assistance rapide avec au moins un organe de stockage d'énergie électrique adapté pour être relié électriquement à ladite machine électrique associée à ladite première turbomachine pour apporter une assistance ponctuelle au générateur de gaz de cette turbomachine, caractérisé en ce que ledit organe de stockage d'énergie électrique constitue un organe de stockage d'énergie dit « primaire » non rechargeable et utilisable une seule fois après activation, à l'exclusion d'un organe de stockage d'énergie dit « secondaire » comprenant une batterie, une supercapacité ou une capacité hybride configurée pour être rechargeable et activée en permanence et en ce que le dispositif d'assistance rapide comprend des moyens d'activation de l'organe de stockage d'énergie électrique et des moyens de couplage de l'organe de stockage d'énergie électrique avec un système d'alimentation électrique de ladite machine électrique.

Selon un premier mode de réalisation possible, l'organe de stockage d'énergie électrique comprend un dispositif prêt-à-l'emploi à faible auto-décharge intégrant une anode et une cathode en contact avec un électrolyte.

Selon un deuxième mode de réalisation possible, l'organe de stockage d'énergie électrique comprend un dispositif inerte avant son activation, intégrant une anode, une cathode et un électrolyte qui ne mouille pas l'anode et la cathode.

Dans ce cas, l'organe de stockage d'énergie électrique peut comprendre une pile à électrolyte séparé, avec un réservoir séparé de stockage de l'électrolyte et des moyens de libération de l'électrolyte hors du réservoir séparé pour lui permettre de venir en contact avec l'anode et la cathode lors de l'activation de l'organe de stockage d'énergie électrique.

A titre d'alternative, l'organe de stockage d'énergie électrique peut comprendre une pile thermique adaptée pour maintenir l'électrolyte solide à température ambiante pendant le stockage et pour liquéfier l'électrolyte par chauffage lors de l'activation de l'organe de stockage d'énergie électrique.

Les moyens d'activation de l'organe de stockage d'énergie électrique peuvent comprendre des moyens d'activation pyrotechnique.

Selon un autre mode de réalisation possible, les moyens d'activation de l'organe de stockage d'énergie électrique comprennent des moyens d'activation électrique.

Selon un mode particulier de réalisation, l'organe de stockage d'énergie électrique est monté en parallèle avec ledit réseau spécifique d'alimentation électrique qui peut être un réseau de bord continu d'alimentation en énergie électrique. Une diode anti-retour peut être intercalée si nécessaire entre l'organe de stockage d'énergie électrique et le réseau de bord continu. Ce réseau de bord continu est lui-même normalement alimenté par le réseau de bord alternatif d'alimentation en énergie électrique, via un organe de redressement ou un convertisseur alternatif-continu.

Selon un autre mode particulier de réalisation, l'organe de stockage d'énergie électrique est monté en série avec l'organe de redressement ou le convertisseur alternatif-continu qui produit la tension du réseau continu à partir du réseau spécifique d'alimentation électrique tel qu'un réseau de bord alternatif et en parallèle avec une diode.

Les diodes peuvent être des semi-conducteurs ou des interrupteurs de type électromécanique ou de type statique commandés.

D'une manière générale, l'organe de stockage d'énergie électrique peut comprendre un ou plusieurs éléments ou batteries d'éléments connectés en série, en parallèle ou en série-parallèle.

Selon un mode particulier de réalisation, l'invention s'applique à un aéronef comprenant une pluralité de turbomachines à turbine libre équipées chacune d'un générateur de gaz, associées chacune à une machine électrique pouvant fonctionner en démarreur et en génératrice, au moins l'une de la pluralité de turbomachines pouvant être mise en mode de veille, tandis qu'au moins une autre de la pluralité de turbomachines est en mode de fonctionnement normal.

Dans ce cas, selon un mode particulier de réalisation, le dispositif d'assistance rapide selon l'invention comprend un seul organe de stockage d'énergie électrique adapté pour être relié électriquement par un dispositif d'aiguillage ou de commutation à la machine électrique associée à celle de la pluralité de turbomachines nécessitant une assistance ponctuelle au générateur de gaz de cette turbomachine précédemment mise en mode de veille.

L'invention vise un aéronef à au moins une turbomachine à turbine libre, comprenant un dispositif d'assistance tel qu'évoqué, l'aéronef pouvant être en particulier un hélicoptère.

### Brève description des figures

D'autres caractéristiques et avantages de l'invention ressortiront de la description détaillée de modes de réalisation particuliers de l'invention, en référence aux dessins annexés, sur lesquels :
- La figure 1 présente un schéma d'un dispositif d'assistance rapide selon un premier mode de réalisation de l'invention, avec un organe d'énergie primaire monté en parallèle avec un réseau de bord d'un aéronef,
- La figure 2 présente un schéma d'un dispositif d'assistance rapide selon un deuxième mode de réalisation de l'invention, avec un organe d'énergie primaire monté en série avec un réseau de bord d'un aéronef,
- La figure 3 présente un schéma montrant l'intégration d'un système selon l'invention dans les systèmes propulsif et électrique d'un aéronef,
- La figure 4 présente un schéma d'un dispositif d'assistance rapide selon un troisième mode de réalisation de l'invention, avec un organe d'énergie primaire unique monté en parallèle avec un réseau de bord d'un aéronef, et
- La figure 5 présente un schéma d'un dispositif d'assistance rapide selon un quatrième mode de réalisation de l'invention, avec un organe d'énergie primaire unique monté en série avec un réseau de bord d'un aéronef.

### Description détaillée

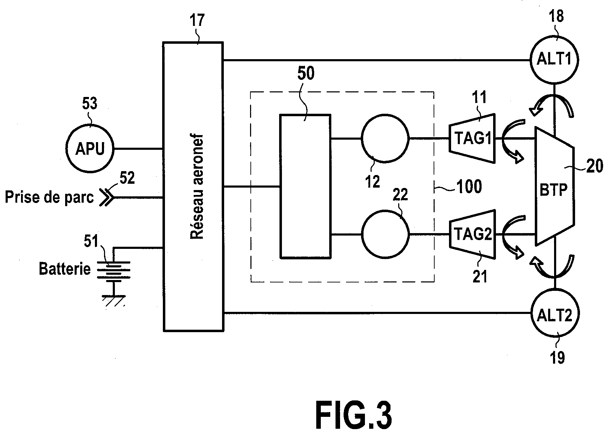

En référence à la figure 3, l'architecture électrique générale d'un exemple de système auquel est applicable l'invention est la suivante. La génération électrique d'un aéronef est assurée par au moins deux alternateurs (en abrégé ALT1 et ALT2) 18, 19 entraînés par une boîte de transmission de puissance (en abrégé BTP) 20, et constitués typiquement par des machines 115VAC/400Hz de type « 3 étages », d'autres machines tournantes étant envisageables.

Cette architecture est avantageuse dans le cadre du vol de croisière économique monomoteur, car elle garantit une indépendance fonctionnelle et organique entre génération électrique et fonctionnement des turbomoteurs 11, 21, permettant de ce fait de conserver un niveau suffisant de disponibilité et de redondance pour la génération électrique en vol de croisière économique, lorsque l'une des deux turbomachines 11, 21 est maintenue dans un régime de veille incompatible avec un quelconque prélèvement de puissance sur le générateur de gaz de cette turbomachine en régime de veille.

De plus cette architecture est moins pénalisante pour le fonctionnement des turbomoteurs 11, 21 qu'un prélèvement au niveau des générateurs de gaz des turbomoteurs 11, 21, notamment en termes d'impact sur les performances d'accélération et de consommation spécifique, dans la mesure où le prélèvement mécanique correspondant à la puissance électrique consommée par le réseau de bord 17 de l'aéronef s'effectue du côté de la turbine libre et non au niveau du générateur de gaz.

Les alternateurs 18, 19 (ALT1 et ALT2) alimentent le réseau électrique 17 de l'aéronef. Ainsi, le réseau de bord 17 est alimenté par un ou plusieurs alternateurs 18, 19 actionnés, directement ou indirectement par au moins une des turbomachines 11, 21. Quand l'une des turbomachines 11, 21 est éteinte, c'est nécessairement l'autre qui alimente de manière prolongée en énergie le réseau de bord 17.

Toutefois, d'autres sources d'énergies disponibles pour alimenter ce réseau 17, qui, en particulier, sert à l'alimentation de l'ensemble du système électrique 100 associé aux turbomachines 11, 21, peuvent être constituées par un groupe auxiliaire de puissance embarqué 53 (en abrégé APU correspondant au sigle de l'expression anglaise « Auxiliary Power Unit »), une ou plusieurs batteries d'accumulateurs 51, ou encore, au sol, une prise de parc 52.

La boîte de transmission de puissance 20 (BTP) est entraînée par les turbomachines 11, 21. Il s'agit ici de turbomoteurs à turbine libre. Elles comprennent chacune une turbine de puissance (turbine libre) entraînant la BTP 20 par l'intermédiaire d'une roue libre, et un générateur de gaz.

Chaque turbomoteur 11, 21, est associé à une machine tournante 12, 22 respectivement apte à fonctionner en démarreur comme en générateur, et qui peut être alimentée à partir du réseau de bord 17 de l'aéronef par l'intermédiaire d'un système 50 de commande électrique incluant le dispositif selon l'invention.

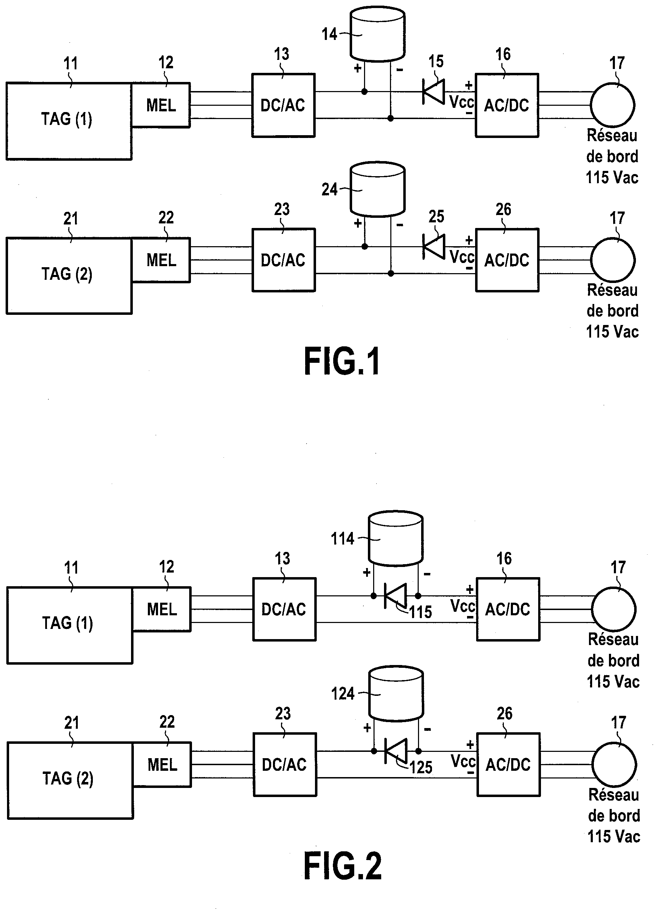

On décrira en référence aux figures 1 et 2, des premier et deuxième modes de réalisation de l'invention. Les figures 1 et 2 montrent, outre les turbomachines 11 et 21 et le réseau de bord alternatif 17, des exemples de l'ensemble électrique 100 de la figure 3 qui constitue un système électrique de démarrage pouvant être appliqué au turbomoteur 11 ou au turbomoteur 21.

Dans le mode de réalisation de la figure 1, on a représenté, pour le turbomoteur 11, un système électrique de démarrage comprenant un convertisseur alternatif/continu 16, encore dénommé convertisseur AC/DC, alimenté à partir du réseau de bord alternatif 17 et un convertisseur continu/alternatif 13, encore dénommé convertisseur DC/AC, relié au convertisseur alternatif/continu 16 et assurant l'alimentation de la machine électrique 12, encore dénommée MEL. Le réseau de bord alternatif 17 et le convertisseur AC/DC 16 définissent un réseau continu d'alimentation en énergie électrique (de tension de sortie Vcc), mais d'autres modes de réalisation de réseau continu sont possibles.

Conformément à l'invention, une diode 15 peut être connectée entre le convertisseur continu/alternatif 13 et le convertisseur alternatif/continu 16. Cette diode est utile lorsque le réseau continu est utilisé par d'autres équipements que la MEL 12. Elle permet de réserver à la MEL 12 la totalité de la puissance produite par le stockeur 14 (qui sera décrit plus loin) lorsque la tension produite par le stockeur 14 est supérieure à la tension Vcc du réseau continu. Elle permet au réseau continu de contribuer à l'alimentation de la MEL 12 lorsque la tension produite par le stockeur 14 est inférieure à la tension Vcc du réseau continu. L'anode de la diode 15 est connectée au pôle positif de la sortie du convertisseur alternatif/continu 16 et la cathode de la diode 15 est connectée au pôle positif du convertisseur continu/alternatif 13. Naturellement, de façon équivalente, la cathode de la diode 15 peut être connectée au pôle négatif de la sortie du convertisseur alternatif/continu 16, tandis que l'anode de la diode 15 est connectée au pôle négatif du convertisseur continu/alternatif 13. La diode 15 peut être un semi-conducteur, ou un interrupteur commandé, statique ou électromécanique.

Par ailleurs un stockeur primaire 14, c'est-à-dire un organe de stockage d'énergie électrique non rechargeable et utilisable une seule fois, est connecté en parallèle avec les convertisseurs 13 et 16, le pôle positif du stockeur primaire 14 étant relié à la cathode de la diode 15 et le pôle négatif du stockeur primaire étant relié aux pôles négatifs des convertisseurs 13 et 16.

Le stockeur primaire 14 est optimisé pour des décharges de puissance brèves et intenses. Il peut s'agir, par exemple, d'un dispositif prêt-à-l'emploi à faible auto-décharge intégrant une anode et une cathode en contact avec un électrolyte.

Le stockeur primaire 14 peut toutefois être un dispositif inerte avant son activation, intégrant une anode, une cathode et un électrolyte qui ne mouille pas l'anode et la cathode.

Dans ce cas, l'organe de stockage d'énergie électrique 14 peut comprendre une pile à électrolyte séparé, avec un réservoir séparé de stockage de l'électrolyte et des moyens de libération de l'électrolyte hors du réservoir séparé pour lui permettre de venir en contact avec l'anode et la cathode lors de l'activation de l'organe de stockage d'énergie électrique 14.

A titre d'alternative, dans le cas d'un dispositif inerte avant son activation, l'organe de stockage d'énergie électrique 14 peut comprendre une pile thermique adaptée pour maintenir l'électrolyte solide à température ambiante pendant le stockage et pour liquéfier l'électrolyte par chauffage lors de l'activation de l'organe de stockage d'énergie électrique 14.

Le stockeur d'énergie électrique primaire 14 est activé lorsque le turbomoteur 11 doit être redémarré en urgence.

Les moyens d'activation de l'organe de stockage d'énergie électrique 14 peuvent comprendre par exemple des moyens d'activation pyrotechnique ou encore des moyens d'activation mécanique ou encore des moyens d'activation électrique.

Dans le mode de réalisation de la figure 1, l'organe de stockage d'énergie électrique 14 est monté en parallèle avec le réseau de bord continu d'alimentation en énergie électrique Vcc, mais du fait qu'une diode 15 est intercalée entre l'organe de stockage d'énergie électrique 14 et le convertisseur alternatif-continu 16 alimenté par le réseau de bord alternatif 17, lorsque l'organe de stockage d'énergie électrique 14 est activé par un moyen d'activation, non représenté sur les dessins, pour fournir l'énergie nécessaire à la réactivation rapide de la turbomachine 11 précédemment en veille, la tension électrique aux bornes de l'organe de stockage 14 peut être supérieure au niveau de la tension Vcc du réseau continu délivrée par le réseau de bord 17 associé au convertisseur alternatif/continu 16. La diode 15 a alors une différence de potentiel négative entre son anode et sa cathode et est dans un état bloqué. L'énergie électrique nécessaire pour la réactivation rapide de la turbine à gaz de la turbomachine 11 est ainsi délivrée entièrement par le stockeur d'énergie primaire 14, ce qui présente les avantages d'envoyer à la MEL 12 la totalité de la puissance fournie par le stockeur 14 et de ne pas élever la tension Vcc du réseau de bord continu de l'aéronef.

Dans le cas où la tension délivrée par le stockeur 14 chargé par le convertisseur DC/AC 13 et la MEL 12 est inférieure à la tension Vcc du réseau continu, la diode 15 conduit, permettant au réseau continu de participer à l'alimentation de la MEL 12.

Enfin, si on ne souhaite pas que le réseau continu participe à l'alimentation de la MEL 12 lorsque la tension du stockeur 14 est inférieure à celle du réseau continu, et puisque, comme dit plus haut, la diode 15 peut être un interrupteur commandé, on peut commander l'interrupteur 15 de telle sorte qu'il ne conduise pas dans ce cas.

Sur la figure 1, on a représenté, en coopération avec la deuxième turbomachine 21 et la deuxième machine électrique 22, des éléments 23 à 26 qui correspondent respectivement aux éléments 13 à 16 coopérant avec la première turbomachine 11 et la première machine électrique 12. Les éléments 23 à 26 ne seront pas décrits à nouveau. Les éléments 23 à 26 jouent un rôle analogue à celui des éléments 13 à 16 précédemment décrits, si la turbomachine 11 est en fonctionnement à régime élevé tandis que la turbomachine 21 est en mode de veille et est susceptible de devoir faire l'objet d'une réactivation rapide.

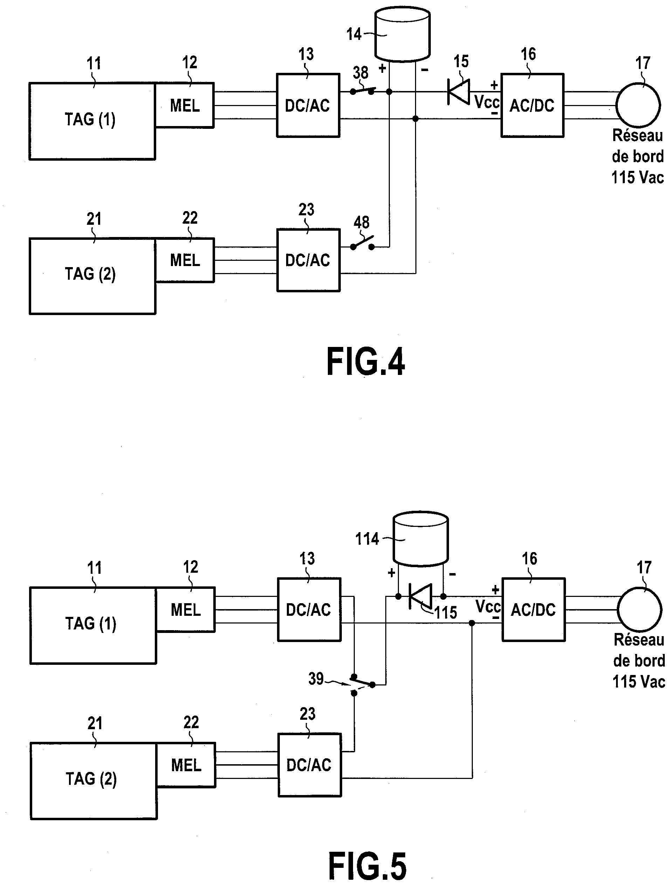

Comme il n'est jamais nécessaire de redémarrer en même temps les turbomachines 11 et 21, il est en fait possible de n'embarquer qu'un stockeur 14 pour redémarrer l'une ou l'autre des deux turbomachines 11 et 21. Un organe de commutation électronique ou électromécanique 38, 48 connecte le stockeur unique 14 soit sur le convertisseur DC/AC 13 (cas représenté sur la figure 4 avec le commutateur 38 en position fermée et le commutateur 48 en position ouverte), soit sur le convertisseur DC/AC 23 selon le besoin.

Comme on l'a représenté sur la figure 4, il est possible d'utiliser non seulement un stockeur unique 14, mais également une diode 15 unique et un convertisseur AC/DC 16 unique, dès lors que l'on dispose d'organes d'aiguillage 38, 48 pour que le stockeur 14 envoie son énergie à la MEL 12 ou à la MEL 22. Le mode de réalisation de la figure 4 se distingue ainsi de celui de la figure 1 par la suppression des éléments 24 à 26. Par ailleurs la fonction aiguillage est très simple à réaliser à l'aide des contacteurs 38, 48 qui sont de simples commandes marche-arrêt (« on/off ») des convertisseurs DC/AC 13 et 23.

A titre de variante, le convertisseur DC/AC 23 de la figure 4 pourrait également être supprimé. Dans ce cas, on pourrait supprimer les commutateurs marche-arrêt 38, 48 et des commutateurs marche-arrêt seraient disposés non pas du côté de l'entrée en courant continu des convertisseurs DC/AC 13 et 23, mais à l'interface entre les MEL 12, 22 et la sortie en courant alternatif du convertisseur DC/AC 13.

Ainsi, tout ou partie des chaînes d'éléments 13 à 16 et 23 à 26 peut être réalisé avec des éléments uniques, l'aiguillage étant fait là où la chaîne se dédouble.

Il est aussi possible de prévoir que seule une turbomachine, par exemple la turbomachine 11, sera susceptible d'être mise en veille, tandis que l'autre turbomachine 21 sera toujours en fonctionnement à régime élevé, auquel cas les éléments 24 et 25 pourraient être omis sans qu'une fonction aiguillage soit nécessaire, puisqu'aucune réactivation rapide ne serait mise en oeuvre pour cette deuxième turbomachine 21.

La figure 2 montre un autre mode de réalisation, qui est analogue à celui de la figure 1 et comporte des éléments semblables qui portent les mêmes numéros de référence et ne seront pas décrits à nouveau, mais dans lequel le stockeur primaire 114 respectivement 124 se trouve associé à une diode 115 respectivement 125.

Sur la figure 2, on voit ainsi, conformément au deuxième mode de réalisation de l'invention, un stockeur primaire 114, c'est-à-dire un organe de stockage d'énergie électrique non rechargeable et utilisable une seule fois, qui est connecté en parallèle avec une diode 115, entre les convertisseurs 13 et 16, le pôle négatif du stockeur primaire 114 étant relié à l'anode de la diode 115 et au pôle positif du convertisseur AC/DC 16, et le pôle positif du stockeur primaire 114 étant relié à la cathode de la diode 115 et au pôle positif du convertisseur DC/AC 13.

Lorsque le stockeur primaire 114 n'est pas en service, la MEL 12 peut être alimentée par le réseau de bord continu via la diode 115. Si la turbomachine 11 préalablement en veille doit faire l'objet d'une réactivation rapide, la diode 115 se bloque et le stockeur primaire 114 est connecté en série avec les convertisseurs 13 et 16.

Le stockeur d'énergie primaire, lorsqu'il est activé, est ainsi en série avec le réseau de bord 17 associé au convertisseur alternatif/continu 16. L'énergie électrique nécessaire pour la réactivation rapide de la turbine à gaz de la turbomachine 11 sera délivrée par le stockeur d'énergie primaire 114 et par le réseau de bord 17, ce qui par rapport à la solution du mode de réalisation de la figure 1 permet de sous dimensionner le stockeur d'énergie 114 en terme de puissance et énergie à délivrer. Néanmoins le convertisseur continu/alternatif 13 doit être dimensionné de façon à admettre la tension qui en résulte et permettre de faire transiter la totalité de la puissance électrique nécessaire à la réactivation rapide.

Cette solution du mode de réalisation de la figure 2 permet de dimensionner de façon optimale la tension d'alimentation lors de la réactivation rapide qui sera la somme des tensions délivrées par le stockeur primaire 114 et de la tension Vcc en sortie du redresseur 16, ce qui permettra de minimiser l'intensité du courant circulant dans le circuit électrique global. Le stockeur 114 quant à lui pourra être dimensionné pour fournir une tension inférieure au niveau de tension générée dans la solution de la figure 1, ce qui aura comme avantage de diminuer la masse et l'encombrement de cet organe.

Par rapport à la solution du mode de réalisation de la figure 1, la solution du mode de réalisation de la figure 2 présente une absence d'autonomie vis-à-vis du réseau de bord 17, de sorte que, selon les applications, il pourra être nécessaire de rajouter des éléments de filtrage en amont du convertisseur 16, afin de respecter les exigences de stabilité réseau.

Dans le mode de réalisation de la figure 2, les éléments 23, 124, 125 et 26 associés à la deuxième turbomachine 21 et à la deuxième machine électrique 22 jouent le même rôle que respectivement les éléments 13, 114, 115 et 16 associés à la première turbomachine 11 et à la première machine électrique 12, mais interviennent dans le cas où c'est la deuxième turbomachine 21 qui est mise en veille et est susceptible de faire l'objet d'une réactivation rapide, tandis que la première turbomachine 11 est en fonctionnement à régime élevé.

Comme dans le premier mode de réalisation, il est toutefois possible d'aiguiller un stockeur unique 114 vers la turbomachine 11 ou vers la turbomachine 21 ou d'assigner par exemple à la seule première turbomachine 11 le rôle d'être en mode de veille, auquel cas on pourrait omettre les éléments 124 et 125.

La figure 5 montre un exemple particulier de réalisation dans lequel on met en oeuvre un stockeur unique 114, une diode unique 115 et un convertisseur AC/DC unique 16. Dans ce cas on peut, comme dans la figure 4, utiliser deux commutateurs marche-arrêt 38, 48 ou simplement commander en marche-arrêt (on/off) les convertisseurs DC/AC 13, 23, ou utiliser un organe d'aiguillage 39, représenté sur la figure 5, qui peut être un simple commutateur, pour connecter le stockeur unique 114 en série avec le convertisseur DC/AC 13 (position représentée sur la figure 5) ou en série avec le convertisseur DC/AC 23. Comme dans le cas du mode de réalisation de la figure 4, à titre de variante, on pourrait supprimer le convertisseur DC/AC 23 et mettre en oeuvre un convertisseur DC/AC 13 unique. Dans ce cas, l'aiguillage serait effectué non pas du côté de l'entrée en courant continu du convertisseur DC/AC 13, mais du côté de la sortie en courant alternatif.

La nature de l'organe de stockage 24, 114 ou 124 peut être tout-à-fait analogue à ce qui a été décrit plus haut en référence à l'organe de stockage 14.

Selon la présente invention, l'organe de stockage 14 ou 114, respectivement 24 ou 124 intégré dans le système électrique d'une turbomachine 11, respectivement 21 susceptible d'être mise en mode de veille, est nécessaire afin que la turbine à gaz correspondante, qui est initialement en mode de veille, soit réactivée de façon rapide, par exemple du fait d'un problème sur la turbine à gaz qui était en fonctionnement. La situation décrite ci-avant, est censée être extrêmement rare et nécessiter obligatoirement par la suite une opération de maintenance de la turbine à gaz. Il apparaît donc sans inconvénient notable que l'organe de stockage 14 ou 114, respectivement 24 ou 124, soit un stockeur utilisable une seule fois et remplacé lors de la maintenance du moteur.

Dans ce concept où l'organe de stockage 14 ou 114, respectivement 24 ou 124 est mono-coup (« one shot » en anglais), il est alors possible d'utiliser une technologie de stockeur dit « primaire », c'est-à-dire que ces stockeurs ne sont pas rechargeables.

Comme on l'a déjà indiqué, les couples primaires se divisent en deux familles :
1/ Famille des couples primaires prêts à l'emploi
   Dans ce cas, leur électrolyte mouille l'anode et la cathode.
   Il existe des couples primaires performants, à très faible auto-décharge, qui ne présentent pas de dégradation temporelle et, dès lors qu'ils ne nécessitent pas de recharge périodique, permettent d'éviter de mettre en oeuvre un système de contrôle et de surveillance (BMS) qui est un équipement complexe et qui, en outre, augmente le poids du système et sa probabilité de défaillance.
   On peut citer les couples Li-SO₂, Li-MnO₂, LiSOCl₂, Zn-MnO₂ (salin ou alcalin), Zn-Ag₂O à titre d'exemples, cette liste étant non exhaustive.
2/ Famille des couples primaires inertes

Leur électrolyte ne mouille pas l'anode et la cathode. Cette famille comprend deux sous-familles :
2.1/ Pile à électrolyte séparé : l'électrolyte est retiré dans un réservoir annexe, et sera libéré lors de l'activation.
   On peut citer le couple Argent-Zinc (Zn-Ag₂O) à titre d'exemple (liste non exhaustive).
2.2/ Pile thermique : l'électrolyte est solide à température ambiante et est réchauffé et donc liquéfié très rapidement lors de l'activation

On peut citer les couples Ca/CaCrO₄ et Li/FeS₂ à titre d'exemples cette liste étant non exhaustive.

Ces couples ont l'avantage d'être inertes électriquement et chimiquement lorsqu'ils ne sont pas activés.

Ils apportent une solution à tous les inconvénients de l'art antérieur utilisant des organes de stockage d'énergie électrique dits « secondaires ».
a/ Il n'y a pas besoin de BMS.
b/ Aucune auto-décharge ne se produit. Il n'y a pas besoin de chargeur.
c/ Aucune dégradation temporelle n'intervient et on peut disposer d'une garantie de par exemple 15 ou 20 ans.
d/ Il n'existe aucun danger électrique, ni risque de décharge inopinée, puisque les organes de stockage d'énergie 14, 114, 24, 124 sont inertes électriquement.
e/ Il existe une très bonne tenue aux conditions sévères d'environnement puisque les organes de stockage d'énergie 14, 114, 24, 124 sont inertes chimiquement.
f/ Il n'existe aucun risque d'emballement thermique à l'état inerte.
g/ Les organes de stockage d'énergie 14, 114, 24, 124, lorsqu'ils sont dans un état inactif, ont la propriété que la résistance d'isolement entre les polarités + et - de l'organe de stockage est très élevée, ce qui permet de l'installer sur une architecture électrique sans précaution préalable, et le couplage au réseau de bord 17, d'une batterie électriquement inerte, se fait donc très simplement par mise en parallèle (le stockeur 14 est à l'état isolant) ou en série (le stockeur supporte l'état tension nulle).

Il est à noter que le stockeur 14 ou 114, 24 ou 124, même s'il est parfois qualifié d'unique en tant qu'entité fonctionnelle dans la présente description, peut ne pas être constitué d'un organe unique, mais peut être fait d'un ou plusieurs couples ou batteries de couples, connectés en parallèle ou en série ou en série-parallèle.

Par ailleurs, on a décrit ci-dessus le cas de deux turbomachines 11, 21, mais l'invention s'applique de la même manière à un nombre inférieur ou supérieur de turbomachines pouvant être utilisées sur un même aéronef, un ou plusieurs dispositifs ou un dispositif avec aiguillage selon l'invention pouvant être appliqués à une ou plusieurs de ces turbomachines.

Dans le cas d'un aéronef monomoteur comprenant une turbomachine 11 unique, qui correspond au cas des modes de réalisation des figures 1 et 2 dans lesquels n'existerait que la chaîne d'éléments supérieure coopérant avec la turbomachine 11, le stockeur 14 ou 114 permet de réaliser une assistance rapide afin d'apporter une assistance ponctuelle rapide au générateur de gaz de la turbomachine 11, au cas où cette turbomachine 11 serait mise, en cours de vol, dans un mode d'extinction non désirée.

D'une façon générale, l'invention n'est pas limitée aux modes de réalisation présentés, mais s'étend à toutes les variantes dans le cadre de la portée des revendications annexées.

## Revendications

1. Aéronef comprenant au moins une première turbomachine (11) à turbine libre équipée d'un générateur de gaz, associée à une machine électrique (12) pouvant fonctionner en démarreur et en génératrice, la première turbomachine (11) pouvant être mise en mode de veille ou en mode d'extinction non désirée, la machine électrique étant connectée à un réseau spécifique (17) d'alimentation en énergie électrique, tel qu'un réseau de bord, l'aéronef comprenant de plus un dispositif d'assistance rapide avec au moins un organe de stockage d'énergie électrique (14 ; 114) adapté pour être relié électriquement à ladite machine électrique (12) associée à ladite première turbomachine (11) pour apporter une assistance ponctuelle au générateur de gaz de cette turbomachine (11), **caractérisé en ce que** ledit organe de stockage d'énergie électrique (14 ; 114) constitue un organe de stockage d'énergie dit « primaire » non rechargeable et utilisable une seule fois après activation, à l'exclusion d'un organe de stockage d'énergie dit « secondaire » comprenant une batterie, une supercapacité ou une capacité hybride configurée pour être rechargeable et activée en permanence et **en ce que** le dispositif d'assistance rapide comprend des moyens d'activation de l'organe de stockage d'énergie électrique (14 ; 114) et des moyens (15 ; 115) de couplage de l'organe de stockage d'énergie électrique avec un système d'alimentation électrique (13, 16) de ladite machine électrique (12).

2. Aéronef selon la revendication 1, dans lequel l'organe de stockage d'énergie électrique (14 ; 114) comprend un dispositif prêt-à-l'emploi à faible auto-décharge intégrant une anode et une cathode en contact avec un électrolyte.

3. Aéronef selon la revendication 1, dans lequel l'organe de stockage d'énergie électrique (14 ; 114) comprend un dispositif inerte avant son activation, intégrant une anode, une cathode et un électrolyte qui ne mouille pas l'anode et la cathode.

4. Aéronef selon la revendication 3, dans lequel l'organe de stockage d'énergie électrique (14 ; 114) comprend une pile à électrolyte séparé, avec un réservoir séparé de stockage de l'électrolyte et des moyens de libération de l'électrolyte hors du réservoir séparé pour lui permettre de venir en contact avec l'anode et la cathode lors de l'activation de l'organe de stockage d'énergie électrique (14 ; 114).

5. Aéronef selon la revendication 3, dans lequel l'organe de stockage d'énergie électrique (14 ; 114) comprend une pile thermique adaptée pour maintenir l'électrolyte solide à température ambiante pendant le stockage et pour liquéfier l'électrolyte par chauffage lors de l'activation de l'organe de stockage d'énergie électrique (14 ; 114).

6. Aéronef selon l'une des revendications 1 à 5, dans lequel lesdits moyens d'activation de l'organe de stockage d'énergie électrique (14 ; 114) comprennent des moyens d'activation pyrotechnique.

7. Aéronef selon l'une des revendications 1 à 5, dans lequel lesdits moyens d'activation de l'organe de stockage d'énergie électrique (14; 114) comprennent des moyens d'activation électrique.

8. Aéronef selon l'une des revendications 1 à 7, dans lequel l'organe de stockage d'énergie électrique (14) est monté en parallèle avec ledit réseau spécifique (17) d'alimentation en énergie électrique.

9. Aéronef selon la revendication 8, dans lequel une diode (15) est intercalée entre l'organe de stockage d'énergie électrique (14) et un organe de redressement ou un convertisseur alternatif-continu (16) alimenté par ledit réseau spécifique (17) d'alimentation en énergie électrique.

10. Aéronef selon l'une des revendications 1 à 7, dans lequel l'organe de stockage d'énergie électrique (114) est monté en série avec un organe de redressement ou un convertisseur alternatif-continu (16) alimenté par ledit réseau spécifique (17) d'alimentation en énergie électrique, et en parallèle avec une diode (115).

11. Aéronef selon la revendication 10, dans lequel ladite diode (115) est constituée par un interrupteur de type électromécanique commandé ou de type statique commandé.

12. Aéronef selon la revendication 10, dans lequel ladite diode (115) est constituée par un élément semi-conducteur.

13. Aéronef selon l'une des revendications 1 à 12, dans lequel l'organe de stockage d'énergie électrique (14 ; 114) comprend un ou plusieurs éléments ou batteries d'éléments connectés en série, en parallèle ou en série-parallèle.

14. Aéronef selon l'une des revendications 1 à 12, comprenant une pluralité de turbomachines (11, 21) à turbine libre équipées chacune d'un générateur de gaz, associées chacune à une machine électrique (12, 22) pouvant fonctionner en démarreur et en génératrice, au moins l'une de la pluralité de turbomachines (11, 21) pouvant être mise en mode de veille, tandis qu'au moins une autre de la pluralité de turbomachines (11, 21) est en mode de fonctionnement normal.

15. Aéronef selon la revendication 14, **caractérisé en ce que** le dispositif d'assistance rapide comprend un seul organe de stockage d'énergie électrique (14 ; 114) adapté pour être relié électriquement par un dispositif d'aiguillage ou de commutation (38, 48 ; 39) à ladite machine électrique (12 ou 22) associée à celle de la pluralité de turbomachines (11, 21) nécessitant une assistance ponctuelle au générateur de gaz de cette turbomachine (11 ou 21) précédemment mise en mode de veille.

## Patentansprüche

1. Luftfahrzeug, umfassend wenigstens eine erste Turbomaschine (11) mit Freilaufturbine, welche mit einem Gasgenerator ausgestattet, einer elektrischen Maschine (12) zugeordnet ist, die als Starter und als Generator arbeiten kann, wobei die erste Turbomaschine (11) in einen Standby-Modus oder einen Modus unerwünschter Abschaltung gesetzt werden kann, wobei die elektrische Maschine an ein spezifisches Netz (17) zur Versorgung mit elektrischer Energie, wie ein Bordnetz, angeschlossen ist, wobei das Luftfahrzeug weiterhin eine Vorrichtung zur schnellen Unterstützung mit wenigstens einem Organ zur Speicherung elektrischer Energie (14; 114) umfasst, das dazu ausgelegt ist, mit der der ersten Turbomaschine (11) zugeordneten elektrischen Maschine (12) elektrisch verbunden zu werden, um dem Gasgenerator dieser Turbomaschine (11) eine punktuelle Unterstützung zukommen zu lassen, **dadurch gekennzeichnet, dass** das Organ zur Speicherung elektrischer Energie (14; 114) ein sogenanntes « primäres » Energiespeicherorgan, das nicht wiederaufladbar und ein einziges Mal nach Aktivierung nutzbar ist, bildet, unter Ausschluss eines sogenannten « sekundären » Energiespeicherorgans, das eine Batterie, eine Superkapazität oder eine Hybridkapazität umfasst, die dazu ausgestaltet ist, wiederaufladbar zu sein und permanent aktiviert zu werden, und dass die Vorrichtung zur schnellen Unterstützung Mittel zur Aktivierung des Organs zur Speicherung elektrischer Energie (14; 114) sowie Mittel (15; 115) zur Kopplung des Organs zur Speicherung elektrischer Energie mit einem Stromversorgungssystem (13, 16) der elektrischen Maschine (12) umfasst.

2. Luftfahrzeug nach Anspruch 1, bei dem das Organ zur Speicherung elektrischer Energie (14; 114) eine einsatzbereite Vorrichtung mit geringer Selbstentladung, die eine Anode und eine Kathode in Kontakt mit einem Elektrolyten enthält, umfasst.

3. Luftfahrzeug nach Anspruch 1, bei dem das Organ zur Speicherung elektrischer Energie (14; 114) eine vor ihrer Aktivierung inaktive Vorrichtung umfasst, die eine Anode, eine Kathode und einen Elektrolyten, welcher die Anode und die Kathode nicht befeuchtet, enthält.

4. Luftfahrzeug nach Anspruch 3, bei dem das Organ zur Speicherung elektrischer Energie (14; 114) eine Zelle mit getrenntem Elektrolyt, mit einem getrennten Behälter zur Lagerung des Elektrolyten und Mitteln zur Freisetzung des Elektrolyten außerhalb des getrennten Behälters umfasst, um ihm zu ermöglichen, bei der Aktivierung des Organs zur Speicherung elektrischer Energie (14; 114) mit der Anode und der Kathode in Kontakt zu kommen.

5. Luftfahrzeug nach Anspruch 3, bei dem das Organ zur Speicherung elektrischer Energie (14; 114) eine thermische Zelle umfasst, die dazu ausgelegt ist, den Elektrolyten bei Raumtemperatur während der Lagerung fest zu halten und den Elektrolyten bei der Aktivierung des Organs zur Speicherung elektrischer Energie (14; 114) durch Erhitzen zu verflüssigen.

6. Luftfahrzeug nach einem der Ansprüche 1 bis 5, bei dem die Mittel zur Aktivierung des Organs zur Speicherung elektrischer Energie (14; 114) pyrotechnische Aktivierungsmittel umfassen.

7. Luftfahrzeug nach einem der Ansprüche 1 bis 5, bei dem die Mittel zur Aktivierung des Organs zur Speicherung elektrischer Energie (14; 114) elektrische Aktivierungsmittel umfassen.

8. Luftfahrzeug nach einem der Ansprüche 1 bis 7, bei dem das Organ zur Speicherung elektrischer Energie (14) mit dem spezifischen Netz (17) zur Versorgung mit elektrischer Energie parallel geschaltet ist.

9. Luftfahrzeug nach Anspruch 8, bei dem zwischen dem Organ zur Speicherung elektrischer Energie (14) und einem Gleichrichterorgan oder einem Wechselstrom-Gleichstrom-Wandler (16), das/der über das spezifische Netz (17) zur Versorgung mit elektrischer Energie versorgt wird, eine Diode (15) zwischengeschaltet ist.

10. Luftfahrzeug nach einem der Ansprüche 1 bis 7, bei dem das Organ zur Speicherung elektrischer Energie (114) mit einem Gleichrichterorgan oder einem Wechselstrom-Gleichstrom-Wandler (16), das/der über das spezifische Netz (17) zur Versorgung mit elektrischer Energie versorgt wird, in Reihe und mit einer Diode (115) parallel geschaltet ist.

11. Luftfahrzeug nach Anspruch 10, bei dem die Diode (115) durch einen Schalter vom gesteuerten elektromechanischen Typ oder vom gesteuerten statischen Typ gebildet ist.

12. Luftfahrzeug nach Anspruch 10, bei dem die Diode (115) durch ein Halbleiterelement gebildet ist.

13. Luftfahrzeug nach einem der Ansprüche 1 bis 12, bei dem das Organ zur Speicherung elektrischer Energie (14; 114) ein oder mehrere Elemente oder Batterien von Elementen umfasst, die in Reihe, parallel oder serien-parallel geschaltet sind.

14. Luftfahrzeug nach einem der Ansprüche 1 bis 12, umfassend eine Vielzahl von Turbomaschinen (11, 21) mit Freilaufturbine, welche jeweils mit einem Gasgenerator ausgestattet, jeweils einer elektrischen Maschine (12, 22) zugeordnet sind, die als Starter und als Generator arbeiten kann, wobei wenigstens eine der Vielzahl von Turbomaschinen (11, 21) in einen Standby-Modus gesetzt werden kann, während wenigstens eine andere der Vielzahl von Turbomaschinen (11, 21) sich im normalen Betriebsmodus befindet.

15. Luftfahrzeug nach Anspruch 14, **dadurch gekennzeichnet, dass** die Vorrichtung zur schnellen Unterstützung ein einziges Organ zur Speicherung elektrischer Energie (14; 114) umfasst, das dazu ausgelegt ist, durch eine Weichen- oder Umschaltvorrichtung (38, 48; 39) mit der elektrischen Maschine (12 oder 22) elektrisch verbunden zu werden, die derjenigen der Vielzahl von Turbomaschinen (11, 21) zugeordnet ist, die eine punktuelle Unterstützung an dem Gasgenerator dieser zuvor in den Standby-Modus gesetzten Turbomaschine (11 oder 21) benötigt.

## Claims

1. An aircraft including at least one first free turbine engine (11) having a gas generator and associated with an electrical machine (12) capable of operating both as a starter and as a generator, the first engine (11) being capable of being put into a standby mode or into an unwanted shut-down mode, the electrical machine being connected to a specific electrical energy power supply network (17), such as an on-board network, the aircraft further including a rapid assistance device with at least one electrical energy storage member (14; 114) adapted to be electrically connected to said electrical machine (12) associated with said first engine (11) in order to provide a burst of assistance to the gas generator of that engine (11), the aircraft being **characterized in that** said electrical energy storage member (14; 114) constitutes a non-rechargeable "primary" energy storage member suitable for use once only after activation, to the exclusion of any "secondary" energy storage member comprising a storage battery, a supercapacitor, or a hybrid capacitor configured to be rechargeable and to be activated permanently, and **in that** the rapid assistance device includes means for activating the electrical energy storage member (14; 114) and coupling means (15; 115) for coupling the electrical energy storage member with an electrical power supply system (13, 16) of said electrical machine (12).

2. An aircraft according to claim 1, wherein the electrical energy storage member (14; 114) comprises a ready-for-use device with low self-discharge incorporating an anode and a cathode in contact with an electrolyte.

3. An aircraft according to claim 1, wherein the electrical energy storage member (14; 114) comprises a device that is inert prior to activation, incorporating an anode, a cathode, and an electrolyte that does not wet the anode and the cathode.

4. An aircraft according to claim 3, wherein the electrical energy storage member (14; 114) comprises a battery with separate electrolyte, having a separate tank for storing the electrolyte and means for releasing the electrolyte from the separate tank in order to enable it to come into contact with the anode and the cathode on activating the electrical energy storage member (14; 114) .

5. An aircraft according to claim 3, wherein the electrical energy storage member (14; 114) comprises a thermopile adapted to keep the electrolyte solid at ambient temperature during storage and to liquefy the electrolyte by heating on activation of the electrical energy storage member (14; 114).

6. An aircraft according to any one of claims 1 to 5, wherein said means for activating the electrical energy storage member (14; 114) comprise pyrotechnic activation means.

7. An aircraft according to any one of claims 1 to 5, wherein said means for activating the electrical energy storage member (14; 114) comprise electrical activation means.

8. An aircraft according to any one of claims 1 to 7, wherein the electrical energy storage member (14) is connected in parallel with said specific electrical energy power supply network (17).

9. An aircraft according to claim 8, wherein a diode (15) is interposed between the electrical energy storage member (14) and a rectifier member or an AC/DC converter (16) powered by said specific electrical energy power supply network (17).

10. An aircraft according to any one of claims 1 to 7, wherein the electrical energy storage member (114) is connected in series with a rectifier member or an AC/DC converter (16) powered by said specific electrical energy power supply network (17), and in parallel with a diode (115) .

11. An aircraft according to claim 10, wherein said diode (115) is constituted by a controlled switch of electromechanical type or of static type.

12. An aircraft according to claim 10, wherein said diode (115) is constituted by a semiconductor element.

13. An aircraft according to any one of claims 1 to 12, wherein the electrical energy storage member (14; 114) comprises one or more elements or sets of elements connected in series, in parallel, or in series-parallel.

14. An aircraft according to any one of claims 1 to 12, including a plurality of free turbine engines (11, 21), each having a gas generator and each associated with an electrical machine (12, 22) capable of operating both as a starter and as a generator, at least one of the plurality of engines (11, 21) being capable of being put in a standby mode, while at least one other one of the plurality of engines (11, 21) is in a mode of normal operation.

15. An aircraft according to claim 14, **characterized in that** the rapid assistance device has a single electrical energy storage member (14; 114) adapted to be electrically connected via a switch device (38, 48; 39) to said electrical machine (12 or 22) that is associated with that one of the plurality of engines (11, 21) that requires a burst of assistance to the gas generator of the engine (11 or 21) previously put on standby.
